# EUROPÄISCHE PATENTANMELDUNG

(11) **EP 2 423 092 A1**
(43) Veröffentlichungstag der Anmeldung: **29.02.2012**
(21) Anmeldenummer: 11178954.1
(22) Anmeldetag: 26.08.2011
(51) Int. Cl.: B62M 3/08

(54) **Fahrradpedal**

(30) Priorität: 31.08.2010 DE 202010012045 U
(71) Anmelder: RTI Sports Vertrieb von Sportartikeln GmbH, 56220 Urmitz (DE)
(72) Erfinder: Arnold, Franc, 56068 Koblenz (DE)
(74) Vertreter: von Kreisler Selting Werner

(57) **Zusammenfassung**

Ein Fahrradpedal, bei dem es sich insbesondere um ein Fahrradpedal für Tourenfahrräder handelt, weist einen Pedalkörper (10) aus Kunststoffmaterial auf. In einer Achsöffnung (20) des Pedalkörpers (10) ist eine Pedalachse (24) angeordnet. Die Pedalachse (24) ist von einer Hülse (22) umgeben. Zwischen der Pedalachse (24) und der Hülse (22) sind zwei als Gleitlager ausgebildete Lagerelement (26, 28) angeordnet.

## Beschreibung

Die Erfindung betrifft ein Fahrradpedal, insbesondere für Tourenfahrräder.

Fahrradpedal weisen einen Pedalkörper auf, der zur Kraftübertragung eine Fußaufstandfläche ausbildet. Insbesondere bei Sportfahrrädern werden häufig sogenannte "Click-Pedale" verwendet. In Verbindung mit Click-Pedalen ist das Tragen entsprechender Schuhe mit an der Schuhsohle vorgesehenen Rastelementen erforderlich. Wenngleich Click-Pedale ein relativ geringes Gewicht aufweisen, besteht der Nachteil, dass besondere Schuhe getragen werden müssen, die insbesondere zum Gehen, nur bedingt geeignet sind. Click-Pedale werden daher bei Tourenfahrrädern nur selten eingesetzt.

Herkömmliche Pedale mit einer Fußaufstandfläche weisen ein vergleichsweise hohes Gewicht auf. Zur Gewichtsreduzierung sind Pedale bekannt, deren Pedalkörper aus Kunststoffmaterial hergestellt ist. Pedalkörper aus Kunststoffmaterial weisen jedoch den Nachteil auf, dass Kunststoff aufgrund des Schrumpfungsprozesses bei der Fertigung relativ hohe Toleranzen aufweist. Die Lagerung von Pedalkörpern aus Kunststoff auf den Pedalachsen erfolgt daher durch zwei Kugellager, die jeweils einen inneren und einen äußeren Lagerring aufweisen. Zur Aufnahme von Axialkräften kann eines der beiden Lager beispielsweise als Schrägkugellager ausgebildet sein. Das Vorsehen von Kugellagern weist jedoch den Nachteil auf, dass diese relativ schwer sind und einen hohen Montageaufwand aufweisen. Ferner weisen Kugellager einen großen Bauraum auf. Dies hat zur Folge, dass aufgrund einer aus Stabilitätsgründen erforderlichen Mindestdicke des Kunststoffs, die Pedalkörper relativ voluminös sind. Die Fußaufstandfläche weist bei derartigen Pedalen daher einen relativ großen Abstand zur Mittellinie der Pedalachse auf. Dies führt dazu, dass während der Tretbewegung der Abstand zwischen der Tretlagerachse und der Fußaufstandfläche stark variiert, so dass die Bewegung des Fußes von einer idealen Kreisbewegung relativ stark entfernt ist.

Aufgabe der Erfindung ist es, ein Fahrradpedal für einen Pedalkörper aus Kunststoffmaterial mit verbesserter Lagerung zu schaffen.

Die Lösung der Aufgabe erfolgt erfindungsgemäß durch die Merkmale des Anspruchs 1.

Das erfindungsgemäße Fahrradpedal, das insbesondere für Tourenfahrräder und dergleichen geeignet ist, weist einen Pedalkörper aus Kunststoffmaterial auf. Der Pedalkörper bildet eine Fußaufstandsfläche, insbesondere zwei einander gegenüberliegende Fußaufstandsflächen aus. Der Pedalkörper weist eine Achsöffnung auf, in der eine Pedalachse angeordnet ist. Die Pedalachse ist erfindungsgemäß von einer Hülse umgeben. Die Lagerelemente sind zwischen der Hülse und der Pedalachse angeordnet, wobei mindestens ein Lagerelement vorgesehen ist. Das mindestens eine Lagerelement ist erfindungsgemäß als Gleitlager ausgebildet. Vorzugsweise sind zwei Lagerelemente, ein äußeres, an einem freien Ende in der Pedalachse vorgesehenes und ein inneres Lagerelement vorgesehen. Das innere Lagerelement ist im montierten Zustand des Fahrradpedals an der Innenseite, d. h. an der in Richtung des Verbindungselements der Pedalachse mit der Tretkurbel angeordnet. Vorzugsweise sind beide Lagerelement als Gleitlager ausgebildet. Die die Pedalachse umgebende Hülse erstreckt sich in bevorzugter Ausführungsform nicht über die gesamte Länge der Pedalachse, sondern nur über den Bereich, in dem die beiden Lagerelemente angeordnet sind.

Die Verwendung von Pedalkörpern aus Kunststoffmaterial weist zunächst den Nachteil auf, dass aufgrund des Schrumpfungsprozesses im Herstellungsverfahren relativ große Toleranzen auftreten. Dies führt dazu, dass bei Fahrradpedalen mit Pedalkörpern aus Kunststoffmaterial keine Gleitlager sondern Kugellager vorgesehen werden. Erfindungswesentlich ist die Kombination aus Gleitlagern mit einer die Pedalachse umgebenden Hülse. Überraschend ist, dass trotz des Vorsehens einer Hülse die Kombination von Gleitlagern mit einer Hülse einen geringeren Bauraum als Kugellager benötigt. Da in bevorzugter Ausführungsform eine Hülse mit relativ dünner Wandstärke von vorzugsweise weniger als 3 mm, insbesondere weniger als 2 mm, vorgesehen ist, kann ein sehr geringer Bauraum bei gleichzeitig geringem Gewicht realisiert werden.

In bevorzugter Ausführungsform der Erfindung ist zumindest das äußere, an einem freien Ende der Pedalachse angeordnete Lagerelement als Gleitlager ausgebildet. Bei dem äußeren Lagerelement handelt es sich um das in montiertem Zustand bezogen auf die Tretkurbel äußere Lagerelement. Vorzugsweise ist auch das innere, näher an der Tretkurbel angeordnete Lagerelement als Gleitlager ausgebildet.

Um einen möglichst ergonomisch ausgestalteten Pedalkörper realisieren zu können, ist es bevorzugt, dass die Fußaufstandsfläche nach außen, d. h. von der Tretkurbel weg, fallend ausgebildet ist. Hierdurch kann ein Pedalkörper mit einem sogenannten "Varus-Keil" ausgebildet werden. Dies hat bezogen auf die Fußstellung erhebliche ergonomische Vorteile. Dies ist jedoch nur durch einen sich nach außen verjüngenden Pedalkörper realisierbar. Ferner besteht die Forderung, dass der Pedalkörper auch an seiner Innenseite eine möglichst geringe Bauhöhe aufweist. In einer besonders bevorzugten erfindungsgemäßen Weiterbildung ist die Pedalachse daher derart ausgebildet, dass sie im Bereich des äußeren Lagerelements einen geringeren Durchmesser als im Bereich des Inneren Lagerelements aufweist. Die Pedalachse ist somit nach außen verjüngend ausgebildet. Dies hat den Vorteil, dass ein äußeres Lagerelement mit geringerem Außendurchmesser eingesetzt werden kann. Hierdurch ist ein Pedalkörper mit Varus-Keil-Funktion realisierbar, der gleichzeitig eine geringe Bauhöhe an der Pedalinnenseite aufweist. Vorzugsweise weist das äußere Lagerelement einen kleineren Innendurchmesser und vorzugsweise auch einen kleineren Außendurchmesser als das innere Lagerelement auf. Erfindungsgemäß ist es bevorzugt, dass das innere Lagerelement größer ausgebildet ist, um eine ausreichende Kraftaufnahme der Lager zu gewährleisten. Hierdurch ist die Lebensdauer der insbesondere als Gleitlager ausgebildeten Lagerelemente verbessert.

In bevorzugter Weiterbildung ist eines der beiden Lagerelemente, vorzugsweise das innere Lagerelement, als Radial- und Axiallager ausgebildet. Da vorzugsweise auch das innere Lagerelement als Gleitlager ausgebildet ist, ist es bevorzugt, dass dieses einen Axialanschlag aufweist. Bei einem als Hohlzylinder ausgebildeten Gleitlager ist der Axialanschlag als ringförmiger Ansatz verwirklicht. Das innere Lagerelement zusätzlich als Axiallager auszubilden hat den Vorteil, dass das äußere Lagerelement als reines Radiallager ausgebildet sein kann und daher klein baut. Über ein an dem freien äußeren Ende der Pedalachse vorgesehenes Spannelement kann ein Verspannen der beiden Lagerelemente erfolgen. Das Spannelement weist hierzu vorzugsweise eine auf einen Lagerzapfen aufschraubbare Mutter auf, wobei zwischen der Mutter und dem äußeren Lagerelement zur Erzeugung einer definierten Vorspannkraft ein Federelement, wie eine Tellerfeder, vorgesehen sein kann. Um eine Vorspannung der Lager auf einfache Weise zu ermöglichen, ist in bevorzugter Ausführungsform der Axialansatz des inneren Lagerelements zwischen einem Absatz der Pedalachse und einer Stirnfläche der Hülse angeordnet. Der Axialanschlag läuft somit gegen eine Stirnfläche der Hülse.

In besonders bevorzugter Weiterbildung der Erfindung weist die Hülse an ihrer Außenseite eine Verdrehsicherung auf. Diese kann beispielsweise durch Längsnuten realisiert werden, die insbesondere im Bereich des inneren Lagerelements an der Außenseite der Hülse vorgesehen sind. Hierdurch ist gewährleistet, dass bei der Montage der Pedalachse, insbesondere beim Verspannen der Lager, ein Verdrehen der Hülse in dem Pedalkörper vermieden ist. Auch ist hierdurch sichergestellt, dass während des Betriebs ein Drehen der Hülse in dem Pedalkörper vermieden ist. Da eine derartige Verdrehsicherung nicht unbedingt über die gesamte Länge der Hülse vorgesehen sein muss, ist es bevorzugt, dass die Hülse in ihrem äußeren, von der Tretkurbel wegweisenden Bereich einen geringeren Außendurchmesser aufweist als an ihrem im Bereich des inneren Lagerelements vorgesehenen Bereich. Dies kann dadurch realisiert werden, dass im äußeren Bereich der Hülse keine Verdrehsicherung vorgesehen ist. Dies hat den Vorteil, dass der Bauraum im Bereich des äußeren Lagerelements weiter reduziert werden kann und somit ein als Varus-Keil dienender Achskörper bei gleichzeitiger relativ geringer Bauhöhe auf der Innenseite realisiert werden kann.

Da Gleitlager sehr staub- bzw. schmutzempfindlich sind, ist es bevorzugt, zwischen der Pedalachse und dem Pedalkörper eine Staubdichtung vorzusehen. Diese vorzugsweise als Radialwellendichtring ausgebildete Staubdichtung ist vorzugsweise im Bereich der Achseintrittsöffnung angeordnet.

Die Herstellung des erfindungsgemäßen Fahrradpedals erfolgt vorzugsweise derart, dass die Hülse in eine Spritzgußform eingelegt wird und sodann durch den aus Kunststoffmaterial hergestellten Pedalkörper umspritzt wird. Da möglichst enge Toleranzen für die Gleitlager realisiert werden sollen, wird die Innenfläche der Hülse nach dem Umspritzen mit dem Pedalkörper im Bereich der Lagerelemente bearbeitet, insbesondere ausgedreht. Anschließend erfolgt die Montage der Pedalachse. Auf dieser können die Gleitlager bereits vormontiert sein, so dass die Pedalachse durch die Achsöffnung in dem Pedalkörper und somit in die in dem Pedalkörper angeordnete Hülse eingesteckt werden kann. Dies erfolgt vorzugsweise bereits zusammen mit dem Radialwellendichtring, der zur Staubabdichtung dient. Die Fixierung der Pedalachse sowie die axiale Vorspannung der Lager erfolgt vorzugsweise über eine an der Außenseite des Pedalkörpers vorgesehene Montageöffnung, durch die die einzelnen Bauteile des Spannelements eingeführt werden können. Durch die Montageöffnung wird somit beispielsweise eine Tellerfeder und eine Ausgleichsscheibe auf einen Zapfen der Pedalachse aufgesteckt und sodann durch eine Mutter, die auf den Zapfen der Pedalachse aufgeschraubt wird, gesichert. Die Montageöffnung kann sodann mit einem Deckel verschlossen werden, um das Eindringen von Schmutz oder Staub zu verhindern. Nachfolgend wird die Erfindung anhand einer bevorzugten Ausführungsform unter Bezugnahme auf die anliegenden Zeichnungen näher erläutert.

Es zeigen:
- Fig. 1: eine schematische Schnittansicht einer bevorzugten Ausführungsform des erfindungsgemäßen Fahrradpedals und
- Fig. 2: eine schematische, perspektivische Ansicht der Hülse.

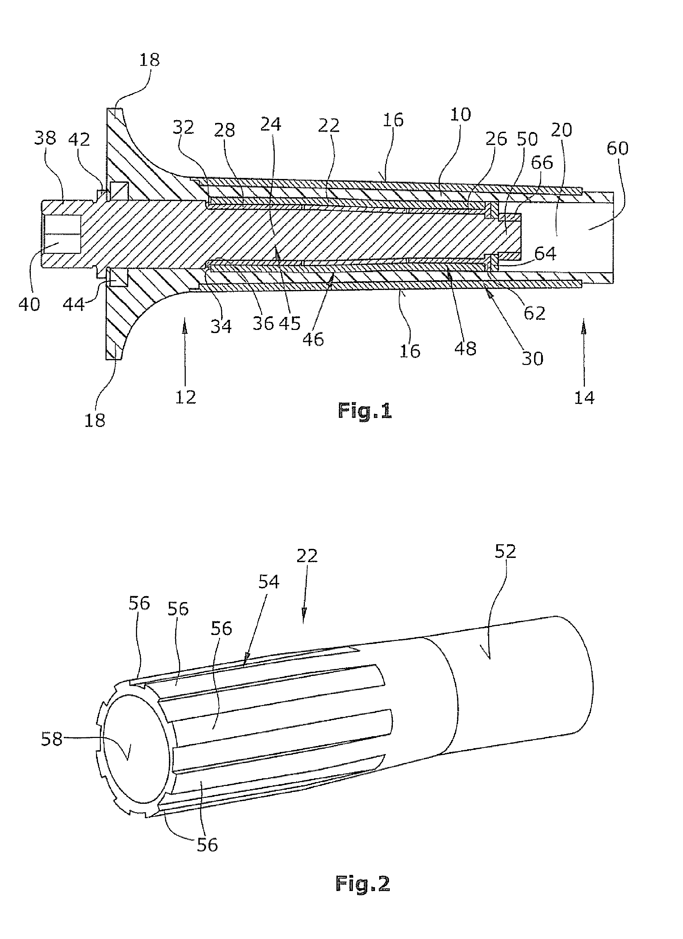

Das Fahrradpedal weist einen Pedalkörper 10 aus Kunststoffmaterial auf. Der Pedalkörper 10 ist insbesondere derart ergonomisch ausgestaltet, dass er entsprechend der Funktion eines Varus-Keils an einer Innenseite 12 eine größere Höhe aufweist als an einer Außenseite 14. Der Pedalkörper ist somit sich nach außen, d. h. in Figur 1 nach rechts, verjüngend ausgebildet. Der Pedalkörper bildet somit zwei einander gegenüberliegende nach außen fallend ausgebildete Fußaufstandflächen 16 aus. An einer Innenseite des Pedalkörpers, die in Richtung einer nicht dargestellten Tretkurbel weist (Figur 1 links), ist ein Innenanschlag 18 vorgesehen. Aufgrund des Innenanschlags 18 kann der Fuß nach innen verschoben werden, ohne dass die Gefahr der Berührung der Tretkurbel besteht.

Der Pedalkörper 10 weist eine im dargestellten Ausführungsbeispiel durchgehende Achsöffnung 20 auf. In der Achsöffnung 20 ist eine Hülse 22 angeordnet. Die Hülse 22 dient zur Aufnahme einer Pedalachse 24. Zur Lagerung des Pedals ist zwischen der Pedalachse 24 und der Hülse 22 ein äußeres Lagerelement 26 sowie ein inneres Lagerelement 28 angeordnet. Beide Lagerelemente 26, 28 sind als Gleitlager ausgebildet.

Das äußere im Bereich eines freien Endes 30 der Pedalachse 24 vorgesehene Lagerelement 26 ist als reines Axiallager ausgebildet. Es handelt sich somit um ein hohlzylindrisch ausgebildetes Gleitlager. Der Innen- sowie der Außendurchmesser des äußeren Gleitlagers 26 sind kleiner als der Innen- und Außendurchmesser des inneren Gleitlagers 28. Das innere Gleitlager 28 ist ferner als Axiallager ausgebildet. Hierzu ist der zylindrische Teil des inneren Gleitlagers 28 mit einem sich radial nach außen erstreckenden Axialanschlag 32 verbunden. Der Axialanschlag 32 stößt einerseits gegen eine Stirnfläche 34 der Hülse 22 und andererseits gegen einen Absatz 36 der Pedalachse 24.

Die Pedalachse 24 weist einen mit einem Außengewinde versehenen Ansatz 38 auf. Mit Hilfe des Ansatzes 38 wird die Pedalachse in die Tretkurbel eingeschraubt. Hierzu ist ferner ein Inbus 40 in dem Ansatz 38 vorgesehen. An den Ansatz 38 schließt sich in Längsrichtung der Pedalachse 24 ein ringförmiger Ansatz 42 an, der zum Anschlag des Pedalkörpers 10 dient. Innerhalb des Ansatzes 42 ist zur Abdichtung der Lagerelemente 26, 28 gegenüber Staub ein Radialwellendichtring 44 angeordnet. Nach dem Absatz 36 ist die Oberfläche der Welle zylindrisch ausgebildet und die Oberfläche als Lagersitz zur Aufnahme des Gleitlagers 28 ausgebildet. In dem sich hieran anschließenden Bereich 46 der Pedalachse 24 ist diese sich in Richtung des freien Endes 30 verjüngend ausgebildet. An den konischen Bereich 46 schließt sich wiederum ein zylindrischer Bereich 48 an. Die Oberfläche des Bereichs 48 ist zur Aufnahme des Gleitlagers 26 bearbeitet, wobei der Bereich 48 einen geringeren Durchmesser als der zur Aufnahme des inneren Lagers 26 dienende Bereich 45 aufweist. An den Bereich 48 der Pedalachse 24 schließt sich ein Wellenzapfen 50 mit Außengewinde an.

Die innerhalb des Pedalkörpers 10 angeordnete Hülse 22 (Figur 2) weist im Bereich des äußeren Gleitlagers 26 einen geringeren Außendurchmesser als im Bereich des inneren Lagerelements 28 auf. In einem äußeren zylindrisch ausgebildeten Bereich 52 (Figur 2) weist die Hülse 22 beispielsweise einen Außendurchmesser von 13 mm auf. In einem inneren Bereich 54 weist die Hülse 22 sodann einen Außendurchmesser von beispielsweise 14 mm auf. Die beiden Bereiche gehen in einem konisch ausgebildeten Bereich ineinander über.

Ferner weist die Hülse 22 im Bereich des inneren Gleitlagers 28 in Längsrichtung verlaufende Ansätze 56 auf, so dass Längsnuten ausgebildet sind. Hierdurch ist eine Verdrehsicherung realisiert. Zur Herstellung des Fahrradpedals wird die Hülse 22 in eine Spritzgussform gelegt und von Kunststoffmaterial umspritzt. Im nächsten Arbeitsschritt wird die Innenfläche 58 der Hülse 22 im Bereich der beiden Gleitlager 26, 28 oberflächenbearbeitet. Anschließend erfolgt das Einstecken der Pedalachse 24, wobei auf der Pedalachse 24 die Gleitlager 26, 28 sowie auch der Radialwellendichtring 44 vormontiert sind. Zur Fixierung der Pedalachse 24 in den Pedalkörper 10 sowie zum Vorspannen der Lager wird über eine Montageöffnung 60 (Figur 1) zunächst eine Tellerfeder 62 sowie eine Ausgleichsscheibe 64 auf den Wellenzapfen 50 aufgesteckt. Anschließend erfolgt ein Aufschrauben einer Mutter 66 auf den Wellenzapfen. Die Montageöffnung 60 kann sodann durch einen Deckel staubdicht verschlossen werden.

## Patentansprüche

1. Fahrradpedal, insbesondere für Tourenfahrräder, mit einem Pedalkörper (10) aus Kunststoffmaterial,
einer im Pedalkörper (10) vorgesehenen Achsöffnung (20) zur Aufnahme einer Pedalachse (24),
einer die Pedalachse (24) umgebenden Hülse (22) und
mindestens einem zwischen der Pedalachse (24) und der Hülse (22) angeordneten, als Gleitlager ausgebildeten Gleitlagerelement (26, 28).

2. Fahrradpedal, insbesondere für Tourenfahrräder, nach Anspruch 1, **dadurch gekennzeichnet, dass** ein äußeres an einem freien Ende (30) der Pedalachse (24) angeordnetes Lagerelement (26) als Gleitlager ausgebildet ist.

3. Fahrradpedal, insbesondere für Tourenfahrräder, nach Anspruch 1 oder 2, **gekennzeichnet durch** ein inneres Lagerelement (28), das als Gleitlager ausgebildet ist.

4. Fahrradpedal, insbesondere für Tourenfahrräder, nach einem der Ansprüche 1 - 3, **dadurch gekennzeichnet, dass** die Pedalachse (24) im Bereich des äußeren Lagerelements (26) verjüngt ist.

5. Fahrradpedal, insbesondere für Tourenfahrräder, nach einem der Ansprüche 1 - 4, **dadurch gekennzeichnet, dass** das äußere Lagerelement (26) einen kleineren Innendurchmesser und vorzugsweise auch einen kleineren Außendurchmesser als das innere Lagerelement (28) aufweist.

6. Fahrradpedal, insbesondere für Tourenfahrräder, nach einem der Ansprüche 1 - 5, **dadurch gekennzeichnet, dass** das innere Lagerelement (28) als Radial- und Axiallager ausgebildet ist, insbesondere einen Axialanschlag (32) aufweist.

7. Fahrradpedal, insbesondere für Tourenfahrräder, nach einem der Ansprüche 1 - 6, **dadurch gekennzeichnet, dass** die Hülse (22) an einer Außenseite (54) insbesondere im Bereich des inneren Lagerelements (28) eine Verdrehsicherung (56) aufweist.

8. Fahrradpedal, insbesondere für Tourenfahrräder, nach einem der Ansprüche 1 - 7, **dadurch gekennzeichnet, dass** die Hülse (22) im Bereich des äußeren Lagerelements (26) einen kleineren Außendurchmesser als im Bereich des inneren Lagerelements (28) aufweist.

9. Fahrradpedal, insbesondere für Tourenfahrräder, nach einem der Ansprüche 6 - 8, **dadurch gekennzeichnet, dass** der Axialanschlag (32) des inneren Lagerelements (28) zwischen einer Stirnfläche (34) der Hülse (22) und einem Absatz (36) der Pedalachse (24) angeordnet ist.

10. Fahrradpedal, insbesondere für Tourenfahrräder, nach einem der Ansprüche 1 - 9, **gekennzeichnet durch** ein am freien äußeren Ende (30) der Pedalachse (24) vorgesehenes Spannelement (66) zum Fixieren und Vorspannen der Lagerelemente (26, 28).

11. Fahrradpedal, insbesondere für Tourenfahrräder, nach einem der Ansprüche 1 - 10, **dadurch gekennzeichnet, dass** der Pedalkörper (10) zumindest im Bereich der Pedalachse (24) sich nach außen verjüngend ausgebildet ist.

12. Fahrradpedal, insbesondere für Tourenfahrräder, nach einem der Ansprüche 1 - 11, **dadurch gekennzeichnet, dass** zwischen der Pedalachse (24) und dem Pedalkörper (10) insbesondere im Bereich einer Achseintrittsöffnung des Pedalkörpers eine die Pedalachse (24) umgebende Staubsichtung (44) vorgesehen ist.
